# FASCICULE DE BREVET EUROPEEN

(11) **EP 0 916 626 B1**
(45) Date de publication et mention de la délivrance du brevet: **28.02.2001**
(21) Numéro de dépôt: 97440107.7
(22) Date de dépôt: 17.11.1997
(51) Int. Cl.: C03C 17/04, C03C 17/42, C03C 3/087

(54) **Procédé pour l'obtention de décors sur des objets en verre d'emballage**
Verfahren zur Herstellung von Dekors auf Glasgegenständen für Verpackung
Method for obtaining decorations on glass articles for packing

(43) Date de publication de la demande: 19.05.1999
(73) Titulaire: Saga Decor, 60700 Pont-Sainte-Maxence (FR)
(72) Inventeur: Roquette, Michel, 75008 Paris (FR)
(74) Mandataire: Littolff, Denis

(56) Documents cités:
- EP-A- 0 359 564
- EP-A- 0 573 379
- WO-A-94/26679
- WO-A-95/25009
- FR-A- 2 229 659
- US-A- 4 343 641
- DATABASE WPI Section Ch, Week 8915 Derwent Publications Ltd., London, GB; Class L01, AN 89-112695 XP002031024 & SU 1 428 725 A (YARMOLINSKAYA L N) , 7 octobre 1988
- PATENT ABSTRACTS OF JAPAN vol. 013, no. 029 (C-562), 23 janvier 1989 & JP 63 233025 A (NIPPON FURITSUTO KK;OTHERS: 01), 28 septembre 1988

## Description

La présente invention concerne les procédés pour la création de motifs satinés ou dépolis sur la surface d'objets en verre, tels que des bouteilles, flacons et analogues.

Elle vise plus particulièrement un procédé visant à obtenir des effets visuels de ce genre sur des objets réalisés en verres silico-sodo-calciques connus dans cette technique sous le nom de "verres d'emballage" et destinés notamment à contenir des produits alimentaires liquides tels que les alcools, par exemple le cognac ou la vodka et autres. De tels produits étant considérés comme de grande consommation, un tel procédé doit donc, au surplus, pouvoir être réalisé de manière continue et à un rythme rapide, ce qui implique sa mécanisation complète, depuis le moment où un objet vierge est prélevé sur un stock, par exemple sur une palette d'entrée, jusqu'à celui où le produit fini est déposé sur un stock en formation, par exemple une palette d'emmenée ver un utilisateur.

Jusqu'à présent, pour cette catégorie de verres, les seules techniques utilisées reposaient sur un enlèvement de matière, soit par attaque aux acides fluorhydrique et/ou chlorhydrique, soit par attaque mécanique par sablage, techniques polluantes et/ou dangereuses.

Le présent procédé est destiné à se substituer à cette technologie en en écartant tous les inconvénients. Il est essentiellement basé sur l'application à ce domaine de la technique du procédé, bien connu par ailleurs, de pulvérisation électrostatique, mais adapté aux contraintes et aux objectifs du nouveau domaine considéré.

Il faut noter que l'appel au dépôt électrostatique d'un émail pulvérulent, dans le but de créer un effet de décor visuel sur une bouteille a été suggéré dans la demande de brevet français N° 2 229 659.

Toutefois, les contraintes liées à cette application du dépôt électrostatique (utilisation d'une composition d'émail contenant une proportion relativement importante de plomb, mise en oeuvre du procédé à température élevée) n'ont pas conduit à la mise en oeuvre effective d'un tel procédé.

La présente invention permet, entre autres, d'éliminer toutes ces contraintes, et propose en même temps un procédé adapté à une mise en oeuvre économiquement rentable, sur la catégorie d'objets précités.

A cet effet, l'invention vise un procédé pour le dépôt, sur la surface d'objets en verre silico-sodo-calcique destinés à l'emballage de produits alimentaires liquides, solides ou pâteux, tels que des flacons ou bouteilles, d'un décor constitué par un revêtement, continu ou non, pratiquement indélébile, d'une composition d'émail ne contenant aucun métal lourd tel que le plomb, produisant, après cuisson, un effet visuel dépoli ou satiné et/ou coloré, ledit procédé consistant, sur une machine à traitement en continu entièrement automatisée, depuis la prise dudit objet vierge sur un stock préexistant jusqu'au dépôt du même objet, décoré, sur un stock en cours de formation en vue de son évacuation, à procéder au dépôt, sur la surface dudit objet dudit émail sous forme d'une fritte sèche à l'état pulvérulent par un procédé électrostatique à température ambiante, puis à la cuisson dudit émail ainsi déposé sur ledit objet.

Les "verres d'emballage" sont bien connus pour le conditionnement des objets de grande consommation. Ce sont des verres silico-sodo-calciques dont la composition rentre généralement dans le cadre suivant :

| | |
|---|---|
| SiO₂ | 70 à 74% |
| Na₂O et K₂O | 13 à 16% |
| CaO et MgO | 10 à 13% |
| BaO | 6 à 6,5% |
| Al₂O₃ | 1,5 à 2,5% |

Une première originalité de l'invention réside donc dans cette nouvelle application de la technologie du dépôt électrostatique d'émaux en vue du satinage des verres d'emballage.

Les compositions d'émail utilisées dans le présent procédé doivent répondre à plusieurs critères. Un premier critère est l'absence, dans ces compositions, de métaux lourds, notamment le plomb. En effet, dès lors que les objets à traiter auront à contenir des produits alimentaires, et notamment des alcools, il importe que ces produits ne risquent pas d'être amenés au contact de métaux lourds, qui sont connus comme très toxiques. D'autre part, l'absence de métaux lourds tend à abaisser la densité des compositions, ce qui facilite leur mise en oeuvre, grâce notamment à leur fluidité dans les conduits souples dans lesquels elles circulent. De plus, des compositions trop denses, même à l'état sec, tendent à s'agglomérer et à s'accumuler par paquets dans le fond de l'enceinte de ce traitement électrostatique.

L'utilisation de compositions d'émaux sans métaux lourds représente donc une seconde caractéristique importante de l'utilisation.

Par ailleurs, pour faciliter encore la manipulation de ces compositions, il est souhaitable d'écarter la difficulté qui résulte de l'irrégularité et de la rugosité des particules. A cet effet, ces particules sont de préférence enrobées individuellement dans un lubrifiant du type silicone, qui les rend régulières, arrondies et lubrifiées.

La granulométrie de ces compositions d'émaux peut avantageusement être de l'ordre de 5 microns en moyenne.

Enfin, la densité de ces compositions est généralement de l'ordre de 1,6 à 1,7.

Les compositions pulvérulentes auxquelles la présente invention fait appel consistent donc dans une fritte d'émail sans aucun métal lourd, d'une taille de particules de l'ordre de 5 microns environ, enrobées dans une pellicule de silicone, et d'une densité d'environ 1,6 - 1,7, compositions qui n'ont jamais été proposées.

Une telle composition utilisable dans l'invention est celle désignée par l'appellation "VN 9668 PU" par la société CERDEC, à Limoges, France.

La technique de projection électrostatique de produits pulvérulents est par ailleurs bien connue dans son principe, comme il est rappelé plus haut. Toutefois, dans le cadre de la présente invention, elle a subi un certain nombre d'adaptations dont certaines vont à l'encontre des idées reçues à ce jour, et ces adaptations représentent d'autres caractéristiques essentielles de l'invention.

En premier lieu, si l'on considère que la composition pulvérulente d'émail est introduite dans un champ électrostatique créé entre une cathode et une anode, un premier mode de réalisation de l'invention consiste à utiliser comme cathode la buse par laquelle est projetée la composition par un courant d'air sous pression, tandis que l'anode est placée à l'intérieur de l'objet, par exemple jusqu'au fond de la bouteille. Toutefois, alors que l'on considérait jusqu'ici que le chauffage de la bouteille réceptrice facilitait la mise en oeuvre du procédé, on a constaté dans le cas présent qu'au contraire ce chauffage conduisait à un effet de répulsion préjudiciable au rendement du procédé. Une troisième caractéristique du présent procédé réside donc dans le fait que, à l'inverse des procédés connus, le dépôt électrostatique de la composition pulvérulente d'émail se fait à température ambiante. Par "température ambiante", on entend ici une température comprise entre approximativement 10 et 28° C, étant entendu qu'une élévation de cette température entraîne une baisse de rendement, de sorte qu'il apparaît souhaitable d'opérer à la température "ambiante" la plus basse possible.

Par "rendement", on entend ici la vitesse à laquelle les bouteilles doivent défiler pour retenir une quantité donnée d'émail déposée par voie électrostatique. Cela signifie que, lorsque la température lors du traitement par dépôt électrostatique augmente, la quantité d'émail effectivement retenue par chaque bouteille diminue, de sorte que, pour que la quantité totale déposée sur une bouteille demeure la même, il faut que la bouteille demeure plus longtemps exposée au processus de dépôt, ce qui à son tour implique un ralentissement du défilement des bouteilles, ce qui correspond donc à une diminution correspondante du rendement global de l'installation.

En second lieu, on a constaté, selon une autre caractéristique encore de l'invention, qu'un traitement préalable, par ailleurs connu à d'autres fins, de la bouteille, permettait d'omettre l'introduction de l'anode dans la bouteille.

On rappellera, en effet, que, compte tenu de la vulnérabilité des verres dits "tendres", et notamment des verres d'emballage vis à vis des facteurs physiques et mécaniques (risques de rayures) aussi bien que chimiques (attaque par des agents atmosphériques), il est connu de faire subir à ces verres des traitements superficiels consistant d'une part à déposer sur l'objet à haute température (650° C) une pellicule de tétrachlorure d'étain (SnCl₄) ou d'oxyde de titane (TiO₂), et d'autre part à déposer sur l'objet à basse température (120 - 180° C) une pellicule d'un sel acide oléique ou de polyéthylène basse pression (basse densité). Toutefois, la présence de ces pellicules sur l'objet quand ce dernier est ensuite soumis à un dépôt électrostatique d'émail a pour conséquence de créer dans ce dépôt des irrégularités visuelles, telles que des marbrures et des craquelures. Pour éviter ces irrégularités, on peut faire appel, avant le dépôt électrostatique, à un revêtement additionnel d'une composition à base de cires de polyéthylène. L'application d'un tel revêtement additionnel à des objets ayant subi les prétraitements superficiels précités rentre dans le cadre de la présente invention.

Cependant, un tel revêtement additionnel s'accompagne d'effets supplémentaires qui étaient imprévisibles et qui conduisent à des caractéristiques additionnelles essentielles de la présente invention.

En effet, on a constaté qu'une telle couche additionnelle confère au surplus à la surface du verre une charge électrique telle qu'il devient possible de conduire le processus de dépôt électrostatique en éliminant complètement l'électrode qu'il était d'usage de placer à l'intérieur de la bouteille.

Bien entendu, à cet égard, cette couche additionnelle peut aussi bien être appliquée à des objets n'ayant pas reçu les traitements superficiels précités, de sorte que, selon un mode de réalisation préférentiel, l'invention consiste à procéder au dépôt électrostatique de la composition pulvérulente d'émail dans une installation ne comportant qu'une cathode constituée par la buse de projection, l'anode étant constituée par l'objet lui-même ayant reçu une couche additionnelle de composition à base de cires de polyéthylène.

L'application de cette couche sur la bouteille et l'élimination de l'anode dans le montage électrique permettant le dépôt électrostatique de la composition d'émail constituent donc une quatrième caractéristique essentielle de l'invention.

Au surplus, on a fait la constatation surprenante qu'une telle couche additionnelle entraînait une augmentation du rendement global de l'installation au sens précisé ci-dessus ; cette augmentation de rendement peut atteindre 20% et plus.

De telles compositions de revêtement additionnel sont connues et disponibles dans le commerce mais à d'autres fins. Un exemple en est celle fabriquée et commercialisée sous la marque "TEGOGLAS 702" par la société Th. Goldschmidt AG à ESSEN en Allemagne, pour des applications limitées à la protection du verre contre les rayures et la casse.

La totalité de la composition pulvérulente d'émail n'étant pas déposée et/ou retenue sur la surface de l'objet, le reste est récupéré dans le système de filtration de l'installation en vue de son recyclage.

Après ce dépôt, l'objet recouvert de la composition subit un chauffage en vue de la cuisson de l'émail en place, sans fusion du verre lui-même bien entendu. A cet effet, la température de cette cuisson est de l'ordre de 600-650° C.

A cet égard, le procédé selon l'invention peut bien entendu être conjugué avec les processus connus pour le décor d'objets en verre au moyen d'autres émaux thermofusibles en vue de l'obtention de diverses indications, marques et décorations diverses.

A cet égard, on notera que les termes utilisés dans la présente description de "revêtement continu ou non" et "effet visuel dépoli ou satiné et/ou coloré" englobent tous les effets visuels à destination décorative ou informative, à savoir aussi bien l'obtention par exemple de bouteilles satinées, blanches, noires ou d'autres couleurs, que de bouteilles comportant des dépôts constituant un graphisme, la marque et/ou toute autre information relative au produit contenu dans ces bouteilles, ou plusieurs de ces effets simultanément.

L'ensemble du procédé selon l'invention est par ailleurs essentiellement rendu mécanisable, c'est à dire continu et automatique, permettant, avec un convoyeur transportant les bouteilles à une vitesse moyenne de 25 cm/seconde, de traiter jusqu'à 3600 bouteilles à l'heure, dans une machine ou installation comportant des moyens permettant de déposer et ranger sans aucun contact les bouteilles dans l'arche de cuisson, de manière à leur permettre le temps de séjour nécessaire et suffisant dans ladite arche sans pour autant interrompre l'amenée et l'évacuation continues des bouteilles. Ces moyens sont connus et consistent en des pignons d'entraînement du convoyeur montés escamotables de façon synchronisée avec la durée de passage dans le tunnel. Une telle machine est connue et construite par exemple par la société ELMETHERM, de Limoges, France.

En faisant appel à cette machine ou installation, l'objectif de la présente invention, qui vise la mise en oeuvre du procédé ainsi défini avec ses caractéristiques, suivant un processus entièrement automatisé et continu, se trouve également atteint.

A titre d'exemple, on peut décrire schématiquement ce processus : les bouteilles étant amenées à la machine à l'état vierge sur une palette, elles sont déposées sur un convoyeur à déplacement continu à 25 cm/seconde par un dépalettiseur semi-automatique qui traverse une première cabine dans laquelle est appliqué le revêtement additionnel, tel que défini ci-dessus. De là, une vis dépose les bouteilles sur un barillet de chargement servant à l'accrochage des bouteilles à un convoyeur aérien équipé de bouchons. Les bouteilles sont ainsi amenées dans une seconde cabine dans laquelle elles subissent le dépôt électrostatique de la composition d'émail telle que définie ci-dessus. La composition est projetée par un jeu de pistolets pneumatiques, sous une pression d'aspiration de la poudre de 2,5 bars, et pour un débit d'air de transport de 5 m³/heure. La distance entre un pistolet et la bouteille est de 240 mm, et la différence de potentiel entre le pistolet - c'est à dire la cathode - et la bouteille constituant l'anode, est de 100 Kv.

La bouteille sort de cette cabine avec un revêtement de composition d'émail de 2,5 g environ, et est amenée à un four de cuisson sur le tapis duquel elle est déposée par un balancier, par groupes de 25 bouteilles, sans que le cycle d'ensemble ne s'arrête, grâce à un débrayage résultant de l'escamotage temporaire des pignons d'entraînement. A la fin de la cuisson, les bouteilles sont reprises par le convoyeur qui les amène à la sortie de la machine, en vue de leur transport vers l'utilisateur.

En vue du recyclage de la quantité de composition d'émail n'ayant pas été fixée par les bouteilles, cette composition est reprise par un tamis d'aspiration sous 7m³/heure qui la retourne aux pompes alimentant les pistolets.

Bien entendu, l'utilisation de toute autre machine ou installation permettant la mise en oeuvre continue et automatisée du présent procédé est englobée dans la présente invention.

## Revendications

1. Un procédé pour le dépôt, sur la surface d'objets en verre silico-sodo-calcique, destinés à l'emballage de produits alimentaires liquides, solides ou pâteux tels que des alcools, par exemple des bouteilles ou flacons, d'un décor constitué par un revêtement pratiquement indélébile, continu ou non, d'une composition d'émail ne contenant aucun métal lourd tel que le plomb, produisant après cuisson un effet visuel dépoli ou satiné et/ou coloré, ledit procédé consistant, sur une machine à traitement entièrement automatisé en continu, depuis la prise de chaque objet vierge sur un stock préexistant, jusqu'au dépôt dudit objet décoré sur un stock en cours de formation en vue de son évacuation,
- à procéder au dépôt sur ledit objet dudit émail sous forme d'une fritte sèche pulvérulente par un processus du type électrostatique à température ambiante, dans lequel, au cours du passage de l'objet dans l'installation de dépôt électrostatique, ladite composition est projetée pneumatiquement dans le champ électrostatique par une buse constituant l'une des électrodes créant ledit champ, à savoir le cathode, l'autre électrode, à savoir l'anode, étant, pendant ledit passage, introduite à l'intérieur dudit objet, puis extraite hors dudit objet après ledit passage,
- puis au chauffage dudit émail sur ledit objet de manière à provoquer la cuisson dudit émail, mais pas la fusion dudit objet.

2. Un procédé pour le dépôt, sur la surface d'objets en verre silico-sodo-calcique, destinés à l'emballage de produits alimentaires liquides, solides ou pâteux tels que des alcools, par exemple des bouteilles ou flacons, d'un décor constitué par un revêtement pratiquement indélébile, continu ou non, d'une composition d'émail ne contenant aucun métal lourd tel que le plomb, produisant après cuisson un effet visuel dépoli ou satiné et/ou coloré, ledit procédé consistant, sur une machine à traitement entièrement automatisé en continu, depuis la prise de chaque objet vierge sur un stock préexistant, jusqu'au dépôt dudit objet décoré sur un stock en cours de formation en vue de son évacuation,
- à procéder au dépôt sur ledit objet dudit émail sous forme d'une fritte sèche pulvérulente par un processus du type électrostatique à température ambiante, dans lequel, préalablement à son passage dans l'installation de dépôt électrostatique de la composition d'émail, ledit objet a subi un traitement superficiel additionnel comprenant un revêtement par une pellicule d'une composition créant une couche de charges électrostatiques superficielles, et, au cours du passage de l'objet dans ladite installation, la composition d'émail est projetée dans le champ électrostatique par une buse constituant l'une des électrodes créant ledit champ, à savoir la cathode, tandis que la seconde électrode, à savoir l'anode, est constituée par l'objet lui-même portant ladite couche électrostatique superficielle,
- puis au chauffage dudit émail sur ledit objet de manière à provoquer la cuisson dudit émail, mais pas la fusion dudit objet.

3. Le procédé selon l'une des revendications 1 et 2, dans lequel les particules d'émail dans la fritte ont une dimension d'environ 5 microns et une densité d'environ 1,6 - 1,7.

4. Le procédé selon l'une des revendications 1 à 3, dans lequel les particules d'émail dans la fritte sont individuellement enrobées de silicone.

5. Le procédé selon l'une des revendications 2 à 4, dans lequel la composition de la pellicule additionnelle comprend une cire de polyéthylène.

6. Le procédé selon l'une quelconque des revendications 1 à 5, dans lequel la composition de verre d'emballage est :
| | |
|---|---|
| SiO₂ | 70 à 74% |
| Na₂O et K₂O | 13 à 16% |
| CaO et MgO | 10 à 13% |
| BaO | 6 à 6,5% |
| Al₂O₃ | 1,5 à 2,5% |

7. Le procédé selon l'une quelconque des revendications 1 à 6, dans lequel la portion de la composition pulvérulente d'émail qui n'a pas été déposée et retenue par l'objet, est recueillie par un système de filtration sous aspiration et recyclée à l'installation de dépôt électrostatique.

8. Le procédé selon l'une quelconque des revendications 1 à 7, dans lequel la température de cuisson après le dépôt électrostatique est de 600-650° C.

## Patentansprüche

1. Verfahren zum Aufbringen eines Dekors, das aus einer praktisch nicht entfernbaren, kontinuierlichen oder diskontinuierlichen Beschichtung aus einer Email-Zusammensetzung, die keinerlei Schwermetall wie etwa Blei enthält, gebildet ist, auf der Oberfläche von Gegenständen aus Natrium-Calcium-Silikatglas, die für die Verpakkung von flüssigen, festen oder pastenartigen Lebensmitteln wie etwa Alkoholen bestimmt sind, beispielsweise Flaschen oder Fläschchen, das nach dem Einbrennen eine mattierte oder satinierte und/oder farbige sichtbare Wirkung hervorruft, wobei das Verfahren in einer unterbrechungsfrei arbeitenden Maschine mit vollständig automatisierter Bearbeitung beginnend bei der Entnahme des unbehandelten Gegenstands aus einem bereits vorhandenen Stapel bis zum Ablegen des verzierten Gegenstandes auf einem Stapel während der Vorbereitung seiner Evakuierung darin besteht,
- die Aufbringung des Emails in Form einer feinpulvrigen trockenen Glasmasse auf den Gegenstand durch einen Prozeß des elektrostatischen Typs bei Umgebungstemperatur vorzunehmen, wobei in dem Prozeß die Zusammensetzung während des Durchgangs des Gegenstands durch die Anlage zur elektrostatischen Aufbringung mit Druckluft durch eine Düse in das elektrostatische Feld geworfen wird, wobei diese Düse eine der das Feld erzeugenden Elektroden, nämlich die Katode, bildet, während die andere Elektrode, nämlich die Anode, während des Durchgangs in den Gegenstand eingeführt ist und dann nach dem Durchgang aus dem Gegenstand entnommen wird,
- das Email auf dem Gegenstand in der Weise zu erhitzen, daß das Einbrennen des Emails, jedoch nicht das Schmelzen des Gegenstandes, hervorgerufen wird.

2. Verfahren zum Aufbringen eines Dekors, das aus einer praktisch nicht entfernbaren, kontinuierlichen oder diskontinuierlichen Beschichtung aus einer Email-Zusammensetzung, die keinerlei Schwermetall wie etwa Blei enthält, gebildet ist, auf der Oberfläche von Gegenständen aus Natrium-Calcium-Silikatglas, die für die Verpakkung von flüssigen, festen oder pastenartigen Lebensmitteln wie etwa Alkoholen bestimmt sind, beispielsweise Flaschen oder Fläschchen, das nach dem Einbrennen eine mattierte oder satinierte und/oder farbige sichtbare Wirkung hervorruft, wobei das Verfahren in einer unterbrechungsfrei arbeitenden Maschine mit vollständig automatisierter Bearbeitung beginnend bei der Entnahme des unbehandelten Gegenstands aus einem bereits vorhandenen Stapel bis zum Ablegen des verzierten Gegenstandes auf einem Stapel während der Vorbereitung seiner Evakuierung darin besteht,
- die Aufbringung des Emails in Form einer feinpulvrigen trockenen Glasmasse auf den Gegenstand durch einen Prozeß des elektrostatischen Typs bei Umgebungstemperatur vorzunehmen, wobei in dem Prozeß vor dem Durchgang der Emailzusammensetzung durch die Anlage zur elektrostatischen Aufbringung der Gegenstand einer zusätzlichen Oberflächenbehandlung unterworfen wird, die eine Beschichtung mit einer Haut mit einer Zusammensetzung, die eine Schicht aus elektrostatischen Oberflächenladungen erzeugt, umfaßt, und die Emailzusammensetzung durch eine Düse in das elektrostatische Feld geworfen wird, wobei die Düse eine der das Feld erzeugenden Elektroden, nämlich die Katode, bildet, während die zweite Elektrode, nämlich die Anode, durch den die elektrostatische Oberflächenschicht tragenden Gegenstand selbst gebildet wird,
- das Email auf dem Gegenstand in der Weise zu erhitzen, daß das Einbrennen des Emails, jedoch nicht das Schmelzen des Gegenstandes, hervorgerufen wird.

3. Verfahren nach einem der Ansprüche 1 und 2, bei dem die Email-Partikel in der Glasmasse eine Abmessung von ungefähr 5 pm und eine Dichte von ungefähr 1,6-1,7 haben.

4. Verfahren nach einem der Ansprüche 1 bis 3, bei dem die Emaille-Partikel in der Glasmasse einzeln mit Silikon umhüllt sind.

5. Verfahren nach einem der Ansprüche 2 bis 4, bei dem die Zusammensetzung der zusätzlichen Haut ein Polyethylen-Wachs enthält.

6. Verfahren nach einem der Ansprüche 1 bis 5, bei dem die Zusammensetzung des Verpackungsglases ist:
| | |
|---|---|
| SiO₂ | 70 bis 74 % |
| Na₂O und K₂O | 13 bis 16% |
| CaO und MgO | 10 bis 13% |
| BaO | 6 bis 6,5 % |
| Al₂O₃ | 1,5 bis 2,5 %. |

7. Verfahren nach einem der Ansprüche 1 bis 6, bei dem der Teil der feinpulvrigen Emailzusammensetzung, der nicht aufgebracht und auf dem Gegenstand gehalten wird, durch ein Filtersystem mittels Ansaugen eingesammelt wird und in die Anlage für elektrostatische Aufbringung zurückgeführt wird.

8. Verfahren nach einem der Ansprüche 1 bis 7, bei dem die Einbrenntemperatur nach der elektrostatischen Aufbringung 600-650 °C beträgt.

## Claims

1. Process for depositing on the surface of objects made of silica-soda-lime glass, for example bottles or flasks, intended for the packaging of liquid, solid or pasty food products such as alcohols, with a decoration consisting of a practically indelible continuous or discontinuous coating of an enamel composition containing no heavy metal such as lead, producing after firing a frosted or satin and/or coloured visual effect, the said process consisting, on an entirely automated continuous treatment machine, from the selecting of each untreated object from a pre-existing stock up to the depositing of the said decorated object on a stock in the course of formation, with a view to its removal,
- of depositing on the said object the said enamel in the form of a dry powdered frit by a process of the electrostatic type at ambient temperature wherein, during the passage of the object inside the electrostatic deposition installation, the said composition is sprayed pneumatically into the electrostatic field by a nozzle constituting one of the electrodes creating the said field, namely the cathode, the other electrode, namely the anode, being introduced inside the said object during the said passage, and then extracted from the said object after the said passage,
- then heating the said enamel on the said object so as to bring about the firing of the said enamel but not the fusion of the said object.

2. Process for depositing on the surface of objects made of silica-soda-lime glass, for example bottles or flasks, intended for the packaging of liquid, solid or pasty food products such as alcohols, with a decoration consisting of a practically indelible continuous or discontinuous coating of an enamel composition containing no heavy metal such as lead, producing after firing a frosted or satin and/or coloured visual effect, the said process consisting, on an entirely automated continuous treatment machine, from the selecting of each untreated object from a pre-existing stock up to the depositing of the said decorated object on a stock in the course of formation, with a view to its removal,
- of depositing on the said object the said enamel in the form of a dried powdered frit by a process of the electrostatic type at ambient temperature wherein, prior to its passage inside the electrostatic apparatus for depositing the enamel composition, the said object has been subjected to an additional surface treatment comprising a coating with a film of a composition creating a layer of surface electrostatic charges and, during the passage of the object inside the said installation, the enamel composition is sprayed into the electrostatic field by a nozzle constituting one of the electrodes creating the said field, namely the cathode, while the second electrode, namely the anode, consists of the object itself carrying the said surface electrostatic layer,
- then heating the said enamel on the said object so as to bring about the firing of the said enamel but not the fusion of the said object.

3. Process according to either of claims 1 or 2, wherein the particles of enamel in the frit have a size of approximately 5 microns and a density of approximately 1.6 - 1.7.

4. Process according to one of claims 1 to 3, wherein the particles of enamel in the frit are individually coated with silicone.

5. Process according to one of claims 2 to 4, wherein the composition of the additional film includes a polyethylene wax.

6. Process according to one of claims 1 to 5, wherein the composition of the packaging glass is:
| | |
|---|---|
| SiO₂ | 70 to 74 % |
| Na₂O and K₂O | 13 to 16 % |
| CaO and MgO | 10 to 13 % |
| BaO | 6 to 6.5 % |
| Al₂O₃ | 1.5 to 2.5 % |

7. Process according to any one of claims 1 to 6, wherein the portion of the powdered enamel composition which has not been deposited and retained by the object is collected by a system of filtration under suction and recycled to the electrostatic deposition installation.

8. Process according to any one of claims 1 to 7, wherein the firing temperature after the electrostatic deposition is 600-650°C.
